# EUROPÄISCHE PATENTSCHRIFT

(11) **EP 1 502 026 B1**
(45) Veröffentlichungstag und Bekanntmachung des Hinweises auf die Patenterteilung: **08.08.2007**
(21) Anmeldenummer: 03732313.6
(22) Anmeldetag: 05.05.2003
(51) Int. Cl.: F03D 1/00, F03D 7/00, F03D 11/02

(54) **SATZ VON WINDKRAFTANLAGEN MIT UNTERSCHIEDLICHEN NENNLEISTUNGEN UND IDENTISCHEM ANTRIEBSTRANG**
GROUP OF WIND POWER INSTALLATIONS HAVING DIFFERENT NOMINAL POWERS FOR AN IDENTICAL DRIVE TRAIN
ENSEMBLE D'EOLIENNES DEVELOPPANT DES PUISSANCES NOMINALES DIFFERENTES POUR UNE TRANSMISSION IDENTIQUE

(30) Priorität: 08.05.2002 DE 10221348
(43) Veröffentlichungstag der Anmeldung: 02.02.2005
(73) Patentinhaber: NORDEX ENERGY GmbH, 22848 Norderstedt (DE)
(72) Erfinder: STEPHAN, Arndt, 74523 Schwäbisch Hall (DE)
(74) Vertreter: Hauck Patent- und Rechtsanwälte
(86) Internationale Anmeldenummer: PCT/EP2003/004684
(87) Internationale Veröffentlichungsnummer: WO 2003/095829

(56) Entgegenhaltungen:
- DE-A- 19 844 258
- FR-A- 2 469 622
- US-A- 4 490 093
- US-A- 5 520 512
- US-B1- 6 308 407

## Beschreibung

Die Erfindung betrifft eine Windkraftanlage mit einer Nennleistung, wobei die Windkraftanlage einen für ein vorbestimmtes Drehmoment ausgelegten Antriebsstrang aufweist. Ferner betrifft die Erfindung ein Verfahren zur Auslegung einer Windkraftanlage mit einer Nennleistung. Ferner betrifft die Erfindung einen Satz von Windkraftanlage mit unterschiedlichen Nennleistungen.

Windkraftanlagen, gelegentlich auch als Windenergieanlagen (WEA) bezeichnet, sind mechatronische Systeme zur Erzeugung von elektrischer Energie aus Wind. Die Windkraftanlage ist im Betrieb einer Vielzahl von Kräften, wie beispielsweise Massen-, Steifigkeits- und aeordynamischen Kräften ausgesetzt. Bei der Herstellung und Auslegung von Windkraftanlagen erfolgt bisher für jede Komponente singulär die Minimierung der Stromgestehungskosten. Bei der Entwicklung eines Anlagetyps wurden also sämtliche Komponenten für sich genommen technisch optimiert, um das Entwicklungsziel geringer Stromgestehungskosten zu erzielen. Mit diesem Optimierungsziel vor Augen wurden in der Vergangenheit Windkraftanlagen entworfen, deren Stromgestehungskosten zwar niedrig liegen, jedoch nicht für eine Serienfertigung geeignet waren. Hinzu kommt, daß durch die Anpassung einer Vielzahl unterschiedlicher Komponenten der Windkraftanlage bei der Entwicklung und später im Betrieb Fehler, beispielsweise im Getriebe des Antriebsstrangs auftreten.

Aus US 4,490,093 ist eine Windenergieanlage mit einem Pitchsystem bekannt, das mechanisch den Anstellwinkel der Rotorblätter einstellt. Durch das Pitchsystem wird abhängig von der Windgeschwindigkeit die aus dem Wind aufgenommene Leistung beschränkt.

Aus US 5,520,512 ist eine Gasturbine bekannt, die sowohl für 50 Hertz- als auch für 60 Hertz-Anwendungen eingesetzt werden kann. Hierzu arbeitet die Turbine mit unterschiedlicher Drehzahl.

Der Erfindung liegt die Aufgabe zugrunde, eine zur Serienfertigung geeignete Windkraftanlage bzw. ein Verfahren zur Herstellung solcher Windkraftanlagen bereitzustellen, die zuverlässig arbeiten und für eine Nennleistung ausgelegt sind. Der Erfindung liegt ferner die Aufgabe zugrunde einen Satz von Windkraftanlagen bereitzustellen, die möglichst zuverlässig für unterschiedliche Nennleistungen ausgelegt sind.

Erfindungsgemäß wird die Aufgabe durch eine Windkraftanlage mit den Merkmalen aus Anspruch 1 sowie durch ein Verfahren mit den Merkmalen aus Anspruch 9 gelöst. Vorteilhafte Ausgestaltungen bilden den Gegenstand der Unteransprüche.

Die erfindungsgemäße Windkraftanlage mit einer Nennleistung besitzt einen Antriebsstrang. Der Antriebsstrang ist für ein Drehmoment ausgelegt. Erfindungsgemäß sind zur Erzielung der Nennleistung Rotorblätter und Parameter der Betriebsführung an den Antriebsstrang angepaßt ausgewählt. Auf diese Art und Weise entstehen beispielsweise Windkraftanlagen mit einer Nennleistung von 1,0 MW oder 1,5 MW, die den gleichen Antriebsstrang besitzen. Bei einer herkömmlichen Windkraftanlage wäre die Windkraftanlage mit einer Nennleistung von 1,0 MW in sämtlichen Elementen an die Nennleistung angepaßt. Es wäre also auch der Antriebsstrang an die Nennleistung angepaßt, so dass beide Windkraftanlagen unterschiedliche Antriebsstränge besitzen. Bei der erfindungsgemäßen Windkraftanlage ist der Antriebsstrang nur innerhalb eines vorbestimmten Intervalls für die Nennleistungen an diese angepaßt. Darüber hinaus erfolgt die Anpassung durch die Auswahl der Rotorblätter und der Parameter in der Betriebsführung. Bevorzugt wird als Parameter für Betriebsführung die Abschaltgeschwindigkeit eingesetzt. Die erfindungsgemäße Windkraftanlage besitzt also bei verschiedenen Nennleistungen einen identischen Typ von Antriebsstrang, so daß eine kostenoptimierte Serienfertigung möglich ist.

In einer bevorzugten Weiterbildung werden die Rotorblätter abhängig von Rotorblattgeometrie, Rotorblattgewicht und/oder Rotorblattlänge ausgewählt. Bevorzugt wird bei der Auswahl der Parameter für die Betriebsführung und die Rotorblätter auch standortspezifische Größen wie beispielsweise der Turbolenzgrad, die mittlere Endgeschwindigkeit, Temperatur und Feuchtegehalt berücksichtigt.

Zu dem Antriebsstrang wird bevorzugt auch das Getriebe gezählt, mit dem die Drehzahl des Rotors auf eine Antriebswelle für den Generator übersetzt werden.

Erfindungsgemäß wird das Verfahren auch zur Auslegung einer Windkraftanlage mit einer Nennleistung gelöst, bei der für einen Antriebsstrang Rotorblätter und Parameter der Betriebsführung derart ausgewählt sind, daß mit dem Drehmoment für welches der Antriebsstrang ausgelegt ist, die Nennleistung erzielt wird. Bevorzugt wird für Nennleistung aus einem vorbestimmten Intervall von Nennleistung nur ein Typ von Antriebsstrang eingesetzt, der über die Auswahl der Rotorblätter und Parameter der Betriebsführung an die Nennleistung angepaßt wird. Bei dem erfindungsgemäßen Verfahren wird zweckmäßigerweise als Parameter für die Betriebsführung die Abschaltgeschwindigkeit und/oder die Steuerparameter zur Anpassung der Blatteinsetllwinkel eingestellt und die Rotorblätter abhängig von Rotorblattgeometrie, Rotorblattgewicht und/oder Rotorblattlänge ausgewählt.

Standortspezifische Größen, insbesondere Turbolenzgrad, mittlere Windgeschwindigkeit, Temperatur und Feuchtegehalt werden zusätzlich bei der Auswahl berücksichtigt.

Die erfindungsgemäße Windkraftanlage gehört zu einem Satz von Windkraftanlagen mit unterschiedlichen Nennleistungen aus einem Intervall von Nennleistungen. Bei dem Satz sind sämtliche Windkraftanlagen mit einem identischen Typ von Antriebsstrang ausgerüstet und unterscheiden sich in den Parametern für die Betriebsführung sowie in den Rotorblättern.

Die vorliegende Erfindung wird anhand der nachfolgenden Figuren näher beschrieben. Es zeigt:
- Fig. 1: den schematischen Aufbau einer Windkraftanlage,
- Fig. 2: den Leistungsbeiwert in Abhängigkeit der Schnellaufzahl für verschiedene Rotoren,
- Fig. 3: das Kennfeld des Leistungswert einer Windenergieanlage mit drei Rotorblättern abhängig von dem Blatteinstellwinkel und
- Fig. 4: Drehmoment-Drehzahl-Kennfeld für Langsam- und Schnelläufer bei festen Blatteinstellwinkel und verschiedenen Windgeschwindigkeiten.

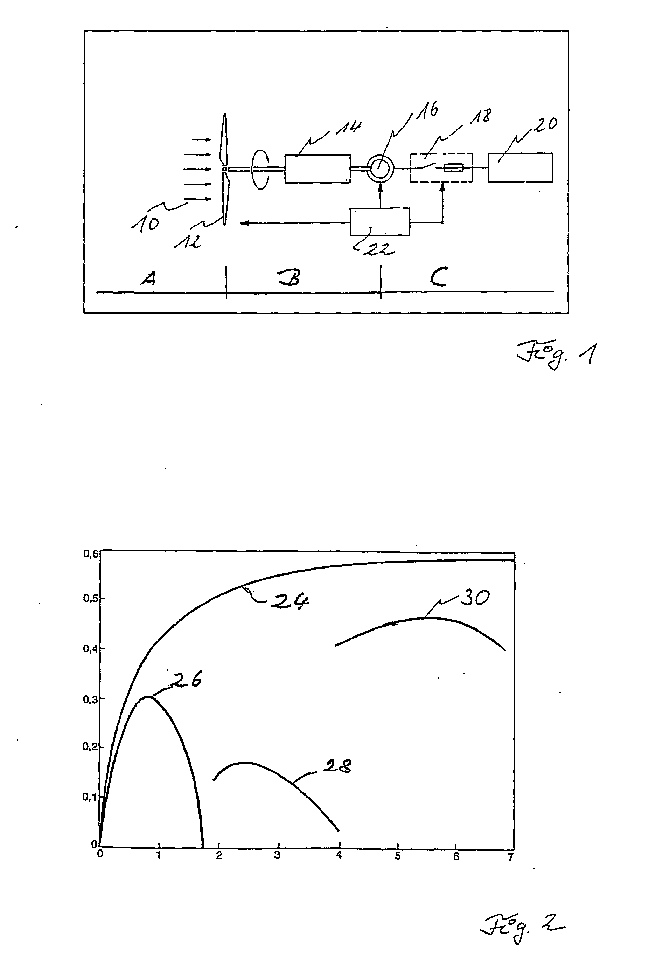

Fig. 1 zeigt die Wirkungskette einer Windenergieanlage. Anströmende Luft 10 setzt die schematisch dargestellten Rotorblätter 12 in Rotation. Der mechanische Triebstrang, bestehend aus Getriebe, Narbe usw. führt die mechanische Energie dem Generator 16 zu. In dem Generator 16 wird die mechanische Energie in elektrische Energie (Wirkleistung) umgewandelt, welche über Schalt- und Schutzeinrichtungen 18 am Netz 20 anliegt. Eine Regelung und Betriebsführung 22 stellt den Winkel der Rotorblätter, den Generator mit seinen Umrichtern und die Schaltschutzeinrichtung. Die Windenergieanlage läßt sich unter dem Gesichtspunkt der Energieumwandlung grob in drei Abschnitte unterteilen. Im ersten Abschnitt A liegt die Energie als Strömungsenergie der Luft, mithin als kinetische Energie vor. Im Abschnitt B liegt die der strömenden Luft entnommene Energie als mechanische Energie des Triebstranges vor. Nach der Umwandlung im Generator und in einem zugehörigen Wechselrichter liegt die Energie als elektrische Energie C vor und kann ins Netz und/oder an Verbraucher abgegeben werden.

Bei der erfindungsgemäßen Windenergieanlage werden im Abschnitt B im wesentlichen stets der gleiche mechanische Triebstrang verwendet. Ebenfalls wird mit einem identischen Generator 16 und einer identischen Schalt- und Schutzeinrichtung sowie Netzeinspeisung gearbeitet. Variiert zur Anpassung der Nennleistung werden bei der erfindungsgemäßen Windenergieanlage der Rotor 12 und die Parameter der Regelung und Betriebsführung 22.

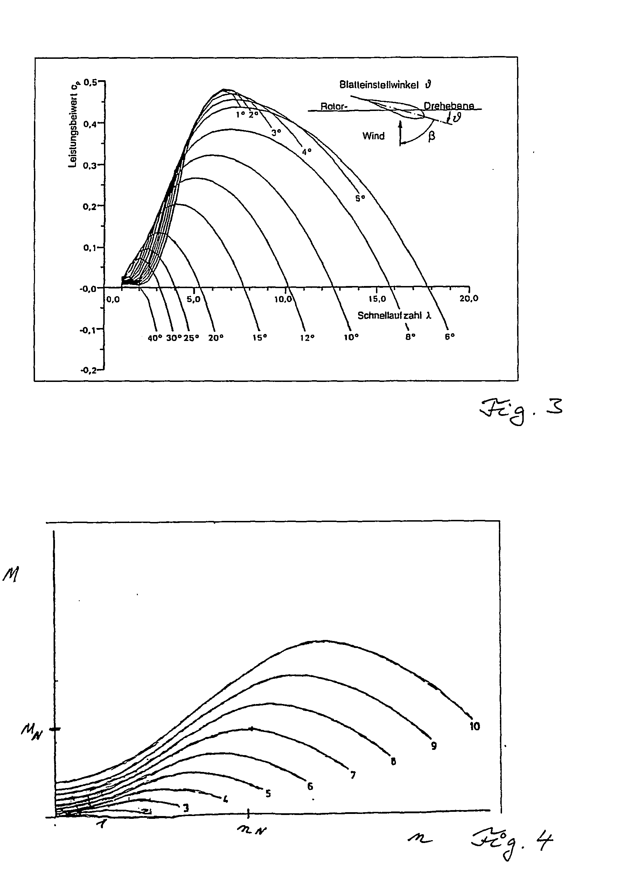

Fig. 2 zeigt beispielhaft die unterschiedliche Auswirkung verschiedener Rotortypen im sogenannten Cₚ-Lambdadiagramm. Für Windräder ist es nicht üblich, einen Turbinenwirkungsgrad anzugeben, sondern den sogenannten Leistungsbeiwert Cₚ zu betrachten. Diese Kenngröße gibt für das Windrad im Betrieb das Verhältnis der entzogener zu der im anströmenden Wind enthaltender Leistung an. Der Wert Cₚ = 0,4 besagt also, daß dem anströmenden Wind 40% der Leitung durch den Rotor entzogen werden. Als wichtige Größe für die Betrachtung von Windkraftanlage ergibt sich die Drehzahl.

Als Drehzahl wird üblicherweise zum Vergleich unterschiedlicher Rotoren die sogenannte Schnellaufzahl λ betrachtet. Die Schnellaufzahl ist definiert als das Verhältnis zwischen Umfangsgeschwindigkeit der Blattspitze und der Windgeschwindigkeit vor dem Windrad. Es ist damit unmittelbar einsichtig, daß die Schnellaufzahl von der Dimensionierung des Rotors abhängt.

Fig. 2 zeigt mit Kurve 24 den Idealwert für Propeller-Windmühlen. Mit zunehmender Schnellaufzahl nimmt der Leistungsbeiwert nur noch schwach zu und nähert sich asymptotisch einem Maximalwert.

Kurve 26 zeigt einen sogenannten amerikanischen Vielblatt-Rotor, als Beispiel für einen Langsamläufer. Kurve 28 zeigt beispielhaft die Leistungsbeiwerte für einen sogenannten holländischen Vierblattrotor. Deutlich höhere Leistungsbeiwerte können für einen schnellen Zweiblatt-Rotor erzielt werden.

In Fig. 3 ist für eine Windenergieanlage mit drei Rotorblättern der Leistungsbeiwert abhängig von dem Blatteinstellwinkel aufgetragen. Die unterschiedlichen Kennlinien zeigen deutlich, daß zu einer gegebenen Schnellaufzahl λ durch richtige Einstellung des Blatteinstellwinkels der Leistungsbeiwert erhöht werden kann.

Die schnell rotierenden Blätter, die beispielsweise zu Leistungsbeiwerten aus der Kurve 30 unter den Kennlinien in Fig. 3 führen, übertragen ein geringeres Drehmoment als langsam laufende Vielblatt-Rotoren. Der Zusammenhang zwischen Drehmoment und Drehzahl für einen Schnelläufer bei festem Blatteinstellwinkel und verschiedenen Windgeschwindigkeiten ist beispielhaft in Fig. 4 dargestellt. Mit zunehmender Windgeschwindigkeiten, die von 1 bis 10 durchnumeriert sind, gibt es bei festen Blatteinstellwinkel einen Zusammenhang zwischen der Drehzahl n und dem Drehmoment M. Ist der mechanische Antriebsstrang einer Windenergieanlage für ein Drehmoment M_{N} ausgelegt, so kann Fig. 4 entnommen werden, bei welcher minimalen Windgeschwindigkeit dieses Drehmoment erreicht wird. Die minimale Windgeschwindigkeit mit der M_{N} erreicht wird, definiert eine Drehzahl n_{N}.

Aus Fig. 4 ist ersichtlich, daß für einen vorgegeben Rotor bei fest vorgegebenem Blatteinstellwinkel Drehmoment und Drehzahl in einer festen Beziehung zueinander stehen. Das Produkt von Drehmoment und Drehzahl ergibt die Leistung.

Bei der erfindungsgemäßen Windkraftanlage wird für eine Nennleistung ein Antriebsstrang vorgegeben. Der Antriebsstrang besitzt ein vorbestimmtes Drehmoment. Zur Erzielung der Nennleistung werden die Rotorblätter und die Parameter der Betriebsführung entsprechend angepaßt. Auf diese Art und Weise entstehen Familien von Windenergieanlagen, die verschiedene Nennleistungen und gleiche Komponenten bei optimaler Ausnutzung der Komponentenleistungsfähigkeit besitzen.

## Patentansprüche

1. Windkraftanlage mit einem für ein vorbestimmtes Drehmoment ausgelegten Antriebsstrang, **dadurch gekennzeichnet, daß** zur Erzielung einer Nennleistung der Windkraftanlage Rotorblätter (12) und Parameter der Betriebsführung (22) an den Antriebsstrang angepaßt ausgewählt sind, wobei innerhalb eines vorbestimmten Intervalls für die zu erzielende Nennleistung genau ein Antriebsstrang vorgesehen ist, an den durch die Auswahl der Rotorblätter und der Parameter für die Betriebsführung die Nennleistung der Windkraftanlage an die zu erzielende Nennleistung angepaßt ist.

2. Windkraftanlage nach Anspruch 1, **dadurch gekennzeichnet, daß** als Parameter für die Betriebsführung die Abschaltgeschwindigkeit eingestellt ist.

3. Windkraftanlage nach Anspruch 1 oder 2, **dadurch gekennzeichnet, daß** als Parameter für die Betriebsführung Steuerparameter zur Anpassung der Blatteinstellwinkel vorgesehen ist.

4. Windkraftanlage nach einem der Ansprüche 1 bis 3, **dadurch gekennzeichnet, daß** die Rotorblätter abhängig von Rotorblattgeometrie, Rotorblattgewicht und/oder Rotorblattlänge ausgebildet sind.

5. Windkraftanlage nach einem der vorangehenden Ansprüche, **dadurch gekennzeichnet, daß** die Auswahl der Parameter für die Betriebsführung und die Rotorblätter zusätzlich abhängig von standortspezifischen Größen erfolgt.

6. Windkraftanlage nach Anspruch 5, **dadurch gekennzeichnet, daß** als standortspezifische Größen Turbulenzgrad, mittlere Windgeschwindigkeit, Temperatur und Feuchtegehalt berücksichtigt werden.

7. Windkraftanlage nach einem der Ansprüche 1 bis 6, **dadurch gekennzeichnet, daß** der Antriebsstrang das Getriebe aufweist.

8. Windkraftanlage nach Anspruch 7, **dadurch gekennzeichnet, daß** der Antriebsstrang zusätzlich Generator (16) und Nabe aufweist.

9. Verfahren zur Auslegung einer Windkraftanlage mit einer Nennleistung, **dadurch gekennzeichnet, daß** für einen Antriebsstrang Rotorblätter (12) und Parameter der Betriebsführung (22) derart ausgewählt werden, daß mit dem Drehmoment, für welches der Antriebsstrang ausgelegt ist, die Nennleistung erzielt wird.

10. Verfahren nach Anspruch 9, **dadurch gekennzeichnet, daß** für Nennleistungen aus einem vorbestimmten Intervall von Nennleistungen genau ein Antriebsstrang vorgesehen ist, an den durch die Auswahl der Rotorblätter (12) und Parameter der Betriebsführung (22) die Nennleistung der Windkraftanlagen angepaßt ist.

11. Verfahren nach Anspruch 9 oder 10, **dadurch gekennzeichnet, daß** als Parameter für die Betriebsführung die Abschaltgeschwindigkeit eingestellt wird.

12. Verfahren nach einem der Ansprüche 9 bis 11, **dadurch gekennzeichnet, daß** als Parameter für die Betriebsführung der Blatteinstellwinkel gesteuert wird.

13. Verfahren nach einem der Ansprüche 9 bis 12, **dadurch gekennzeichnet, daß** die Rotorblätter abhängig von Rotorblattgeometrie, Rotorblattgewicht und/oder Rotorblattlänge ausgewählt werden.

14. Verfahren nach einem der Ansprüche 9 bis 13, **dadurch gekennzeichnet, daß** für das Erzielen der Nennleistung standortspezifische Größen bei der Auswahl der Rotorblätter und der Parameter berücksichtigt werden.

15. Verfahren nach Anspruch 14, **dadurch gekennzeichnet, daß** als standortspezifische Größen, Turbulenzgrad, mittlere Windgeschwindigkeit, Temperatur und Feuchtegehalt berücksichtigt werden.

16. Satz von Windkraftanlagen mit unterschiedlichen Nennleistungen, die innerhalb eines Intervalls von Nennleistungen liegen, bei dem sämtliche Windkraftanlagen einen identischen Typ von Antriebsstrang besitzen und nach dem Verfahren gemäß einem der Ansprüche 9 bis 15 ausgelegt sind.

## Claims

1. Wind power installation comprising a drive train designed for a predetermined torque, **characterized in that** to reach a nominal power of the wind power installation, rotor blades (12) and parameters for the operating mode (22) are selected to be adapted to the drive train, within a predetermined range for the nominal power to be reached, just one drive train being provided at which, by the selection of the rotor blades and the parameters for the operating mode, the nominal power of the wind power installation is adapted to the nominal power to be reached.

2. Wind power installation according to Claim 1, **characterised in that** the shut-down speed is set as a parameter for the operating mode.

3. Wind power installation according to Claim 1 or 2, **characterised in that** a control parameter is provided as a parameter for the operating mode for adapting the blade angle setting.

4. Wind power installation according to one of Claims 1 to 3, **characterized in that** the rotor blades are configured depending on the rotor blade geometry, rotor blade weight and/or rotor blade length.

5. Wind power installation according to one of the preceding claims, **characterised in that** the selection of the parameters for the operating mode and the rotor blades is additionally carried out dependent on location-specific variables.

6. Wind power installation according to Claim 5, **characterised in that** turbulence levels, average wind speed, temperature and moisture content are considered as location-specific variables.

7. Wind power installation according to one of Claims 1 to 6, **characterised in that** the drive train comprises the gear mechanism.

8. Wind power installation according to Claim 7, **characterised in that** the drive train additionally comprises the generator (16) and hub.

9. Method for designing a wind power installation having a nominal power, **characterised in that** for a drive train rotor blades (12) and parameters for the operating mode (22) are selected such that with the torque, for which the drive train is designed, the nominal power is reached.

10. Method according to Claim 9, **characterized in that** for nominal powers from a predetermined range of nominal powers just one drive train is provided to which the nominal power of the wind power installations is adapted, by the selection of rotor blades (12) and parameters for the operating mode (22).

11. Method according to Claim 9 or 10, **characterised in that** the shut-down speed is set as a parameter for the operating mode.

12. Method according to one of Claims 9 to 11, **characterised in that** the blade angle setting is controlled as a parameter for the operating mode.

13. Method according to one of Claims 9 to 12, **characterised in that** the rotor blades are selected depending on the rotor blade geometry, rotor blade weight and/or rotor blade length.

14. Method according to one of Claims 9 to 13, **characterised in that** for reaching the nominal power, location-specific variables are considered when selecting the rotor blades and the parameters.

15. Method according to Claim 14, **characterised in that** degree of turbulence, average wind speed, temperature, and moisture content are considered as location-specific variables.

16. Group of wind power installations having different nominal powers which are within a range of nominal powers in which all wind power installations have an identical type of drive train and are designed according to the method according to one of Claims 9 to 15.

## Revendications

1. Eolienne avec une ligne d'entraînement conçue pour un couple prédéfini, **caractérisée en ce que**, pour atteindre une puissance nominale de l'éolienne, des pales de rotor (12) et des paramètres de conduite d'exploitation (22) sont sélectionnés de façon adaptée à la ligne d'entraînement, une ligne d'entraînement étant prévue précisément à l'intérieur d'un intervalle prédéfini pour la puissance nominale à atteindre, ligne d'entraînement à laquelle, par la sélection des pales de rotor et des paramètres de conduite d'exploitation, la puissance nominale de l'éolienne est adaptée à la puissance nominale à atteindre.

2. Eolienne selon la revendication 1, **caractérisée en ce que** la vitesse de décrochage est réglée en tant que paramètre pour la conduite d'exploitation.

3. Eolienne selon la revendication 1 ou 2, **caractérisée en ce que**, comme paramètre pour la conduite d'exploitation, il est prévu des paramètres de commande pour l'adaptation des angles de réglage de pales.

4. Eolienne selon une des revendications 1 à 3, **caractérisée en ce que** les pales de rotor sont constituées en fonction de la géométrie des pales de rotor, du poids des pales de rotor et/ou de la longueur des pales de rotor.

5. Eolienne selon une des revendications précédentes, **caractérisée en ce que** la sélection des paramètres pour la conduite d'exploitation et pour les pales de rotor s'effectue en plus en fonction de grandeurs spécifiques au lieu d'implantation.

6. Eolienne selon la revendication 5, **caractérisée en ce que**, en tant que grandeurs spécifiques au lieu d'implantation, le degré de turbulence, la vitesse moyenne du vent, la température et la teneur en humidité sont pris en considération.

7. Eolienne selon une des revendications 1 à 6, **caractérisée en ce que** la ligne d'entraînement présente l'engrenage.

8. Eolienne selon la revendication 7, **caractérisée en ce que** la ligne d'entraînement présente en plus la génératrice (16) et le moyeu.

9. Procédé de conception d'une éolienne développant une puissance nominale, **caractérisé en ce que**, pour une ligne d'entraînement, les pales de rotor (12) et les paramètres de conduite d'exploitation (22) sont sélectionnés de sorte que la puissance nominale est atteinte avec le couple pour lequel la ligne d'entraînement est conçue.

10. Procédé selon la revendication 9, **caractérisé en ce que**, pour les puissances nominales à partir d'un intervalle prédéfini de puissances nominales, il est prévu précisément une ligne d'entraînement à laquelle la puissance nominale des éoliennes est adaptée par la sélection des pales de rotor (12) et des paramètres de conduite d'exploitation (22).

11. Procédé selon la revendication 9 ou 10, **caractérisé en ce que** la vitesse de décrochage est réglée en tant que paramètre pour la conduite d'exploitation.

12. Procédé selon une des revendications 9 à 11, **caractérisé en ce que** l'angle de réglage de pales est commandé en tant que paramètre pour la conduite d'exploitation.

13. Procédé selon une des revendications 9 à 12, **caractérisé en ce que** les pales de rotor sont sélectionnées en fonction de la géométrie des pales de rotor, du poids des pales de rotor et/ou de la longueur des pales de rotor.

14. Procédé selon une des revendications 9 à 13, **caractérisé en ce que**, pour atteindre la puissance nominale, des grandeurs spécifiques au lieu d'implantation sont prises en considération lors de la sélection des pales de rotor et des paramètres.

15. Procédé selon la revendication 14, **caractérisé en ce que**, en tant que grandeurs spécifiques au lieu d'implantation, le degré de turbulence, la vitesse moyenne du vent, la température et la teneur en humidité sont pris en considération.

16. Ensemble d'éoliennes développant des puissances nominales différentes qui se situent à l'intérieur d'un intervalle de puissances nominales dans lequel toutes les éoliennes possèdent un type identique de ligne d'entraînement et sont conçues suivant le procédé selon une des revendications 9 à 15.
